# EUROPEAN PATENT APPLICATION

(11) **EP 1 303 082 A2**
(43) Date of publication of application: **16.04.2003**
(21) Application number: 02290476.7
(22) Date of filing: 28.02.2002
(51) Int. Cl.: H04L 12/46

(54) **Transparent LAN-to-LAN connection between two customer locations through a RPR data transport network**

(30) Priority: 15.10.2001 IT MI20012122
(71) Applicant: ALCATEL, 75008 Paris (FR)
(72) Inventor: Fontana, Michele, 23878 Verderio Superiore(Lecco) (IT); Grandi, Pietro Vittorio, 20139 Milano (IT); Busi, Italo, 20023 Cerro Maggiore (Milano) (IT)
(74) Representative: Lamoureux, Bernard

(57) **Abstract**

Method to set-up a transparent LAN-to-LAN functionality connection between a first multicustomer source location and a second multicustomer destination location through a RPR data transport network, said method comprising the steps of: receiving an Ethernet frame from a customer interface; processing in a conventional manner the Ethernet frame received; adding an auxiliary header to form a TLS frame; and adding to the resulting TLS frame a RPR header to form a RPR data transport frame for the RPR network. The auxiliary header comprises information about the channel designed to transport the RPR frame from the source node input interface to the destination node output interface.

## Description

The present invention relates to the data transport networks and in particular to a method and an apparatus to supply a transparent LAN-to-LAN functionality connection between two multicustomer locations through a data transport network, e.g. an RPR network.

As known, the Local Area Networks (LAN) are packet-switched networks which are optimized for the data traffic by using the Ethernet technology. Ethernet is one of the most consolidated technologies to interconnect computers in a LAN network and are based on a bus topology.

Besides, the data transport networks, such for instance the RPR (Resilient Packet Ring) networks are known, fit for the optimal utilization of the available band for packet transport in ring networks. The mechanisms for the operation of the RPR networks are under standardization by the IEEE.

The ring technology can be based - for instance - on physical transport layers SDH, SONET or Ethernet, where the frames of the RPR networks are physically transported. A known RPR network is based upon a two counter-rotating rings configuration, respectively identified as Inner Ringlet and Outer Ringlet. Both the rings are used to transport the data and/or control RPR frames among a series of RPR nodes. RPR is a so-called layer-2 technology with respect to the ISO-OSI or TCP-IP layering.

Even if it has not yet been defined in detail in the field of the RPR standardization, the format of a RPR frame comprises a part of the RPR Header and a part of payload (real information content). The part of payload contains the information of the upper layer to be transported. Among the various fields of the RPR header, there are the following:
- Identifier of the RPR destination node;
- Identifier of the RPR source node; and
- Type of protocol: to identify the protocol which characterizes the following part of RPR frame/packet, namely the information of upper layer in the payload.

In each node of a RPR ringlet, the RPR Header is read and the RPR destination node is identified: if the identifier of the destination node corresponds to the identifier of the RPR node which has received the packet, the packet is extracted from the RPR network, otherwise it is forwarded transparently without any processing till reaching the RPR destination node. Another intrinsic characteristic of the RPR networks is that of transporting to the destination also the errored frames, unless the error is an obstacle for the intermediate RPR nodes to identify the RPR destination node. The latest shall be free of deciding if the packet is to be rejected or passed to the upper layer, depending on the type and the "heaviness" of the error.

Typically, on each input/output node are laid several ports connected to customers. This means that a RPR node receives Ethernet frames generated by several ports to be introduced into the RPR network and to be transported to destination where, of course, the Ethernet frames shall be re-assigned to the respective output ports. Unfortunately, the RPR mechanism does not foresee this type of "select" functionality since it considers only a single input and a single output for each RPR node.

Theoretically, this type of problem could be solved by using an encapsulating protocol, like GFP (Generic Framing Procedure), standardized in ITU-T (G.7041). Nevertheless, in spite of the fact that this protocol allows the transport to destination of the errored packets, the limit is that it is not applicable to the data networks, as it is a mapping procedure working only on point-to-point SDH/SONET networks or to the optical transport networks (OTN).

In the "data world", in particular for meshed networks, it is also known the MPLS technology (Multi Protocol Label Switching) utilized in the field of the architecture of Layer 2 MPLS VPN described in an Internet-Draft presented in IETF (PPPVPN Working Group). The intrinsic problem of this architecture, when used as TLS layer, is that the Ethernet errored frames, transported by the RPR network, are discarded when they leave the RPR network and so they can not reach the final output port.

A purpose of the present invention is therefore to indicate a method to interface efficiently the RPR layer and the customer layer in a data transport network, in particular to manage packets coming from / addressed to several customer interfaces, avoiding rejection of errored packets.

A further purpose of the present invention is to indicate a method to efficiently transport control information, for example relating to failure propagation or detection, more generally devoted to solve problems relating to breaks or quality level in the network, more specifically occurring at the interface between the RPR layer and the customer layer in a data transport network.

A further purpose of the present invention is to find a corresponding new type of frame.

These purposes are achieved through a method according to the Claim 1, an apparatus according to the Claim 11, and a frame according to claim 18.

Other advantageous aspects of the present invention are mentioned in the dependent claims. All the claims are intended to be an integral part of the present description.

The basic idea of the present invention consists in defining a new layer TLS (Transparent LAN Service), in between the RPR and the customer (Ethernet) layer, with corresponding TLS frames, the presence of which is signalled by an appropriate value in the header of the RPR layer.

A further aspect of the basic idea is to define a further type of TLS frame, namely a TLS control frame, in addition to the first type of TLS user data frame defined below, with the purpose to efficiently transport control information in the TLS layer.

The present invention shall be really clear thanks to the hereinafter detailed description, supplied by way of non-limiting examples as set out in the appended Figures, wherein:
- Fig. 1 shows a RPR ringlet network with a plurality of RPR nodes interconnected by sections to form two counter-rotating rings;
- Fig. 2 shows schematically a node or element of RPR network which receives Ethernet frames from several ports and, similarly, it sends RPR frames to several ports;
- Fig. 3A shows a conventional RPR node, to which an auxiliary processing block has been associated;
- Fig. 3B shows a RPR node, where an auxiliary processing block is integrated;
- Fig. 4 shows a RPR frame according to the present invention;
- Fig. 5 shows the assignment of bits to the TLS Header; and
- Fig. 6 shows a RPR ring network, where a customer input interface and a customer output interface have been put into evidence;
- Fig. 7 shows a transport network with the TLS layer between two customer boxes;
- Fig. 8 shows how the TLS control frames are inserted in the user traffic flow.

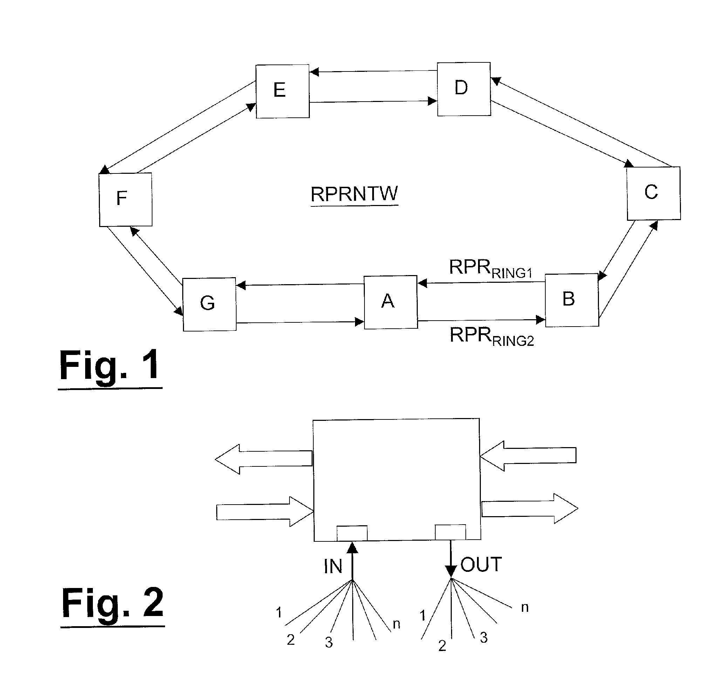

Fig. 1 shows a RPR ring network RPRNTW with two counter-rotating rings (RPR_{RING1}, RPR_{RING2}) and a plurality of RPR nodes (A, B, ...G). A generic RPR node of the RPR ring of Fig. 1 is shown schematically but more in detail in Fig. 2. From this representation, it is clear that, although the RPR node shows a single input (IN) of Ethernet frames, it receives Ethernet frames from a plurality (1, ... n) of input ports. Similarly, in spite of an only OUT, this output distributes Ethernet frames to several (1, ..., n) output ports, in a multicustomer environment.

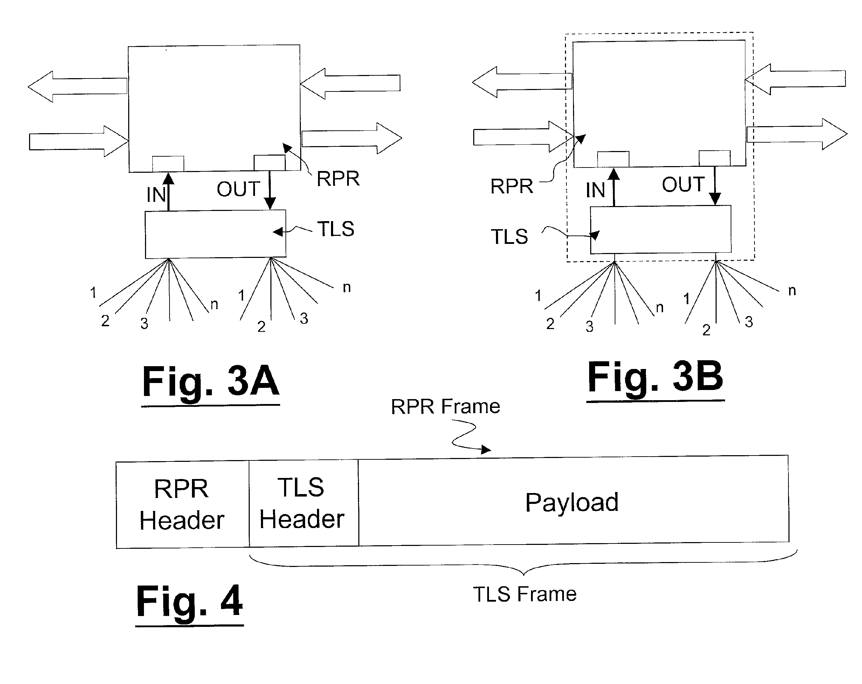

An RPR node according to the present invention is schematically illustrated in the Fig. 3A and 3B. In both figures, an auxiliary TLS processing block is present outside of the existing RPR node (see Fig. 3A) or integrated in a new RPR node (see Fig. 3B, dashed rectangle).

In the TLS processing block the Ethernet frames are received coming from different ports (1, 2, ...n) and the standard processes are carried out such as: Ethernet frame delineation, flow control and buffering. In the TLS processing block there is also the payload of RPR Frames to be transported in the RPR ring (RPRNTW of Fig.1).

According to the present invention, with reference to Fig. 4, the TLS block shall add to the Ethernet frames to be transported an auxiliary header (TLS Header), for instance conveniently composed of 32 bits. In the auxiliary header (TLS Header) information is inserted about the channel identifier CHID of the connection between the input port (IN) and the destination port of the Ethernet frame (OUT).

Conveniently, in order to assure a greater safety in the distribution phase of incoming packets (namely to avoid errored distributions), bits are reserved to carry out, in reception, a control (HEC) of the possible accumulated errors in the Header TLS during the transport in the RPR ringlet. Above the auxiliary TLS Header, a RPR Header is conventionally added. In the latter, the field called "protocol type"- reserved to indicate the type of protocol utilized - is filled with a corresponding value for the TLS protocol.

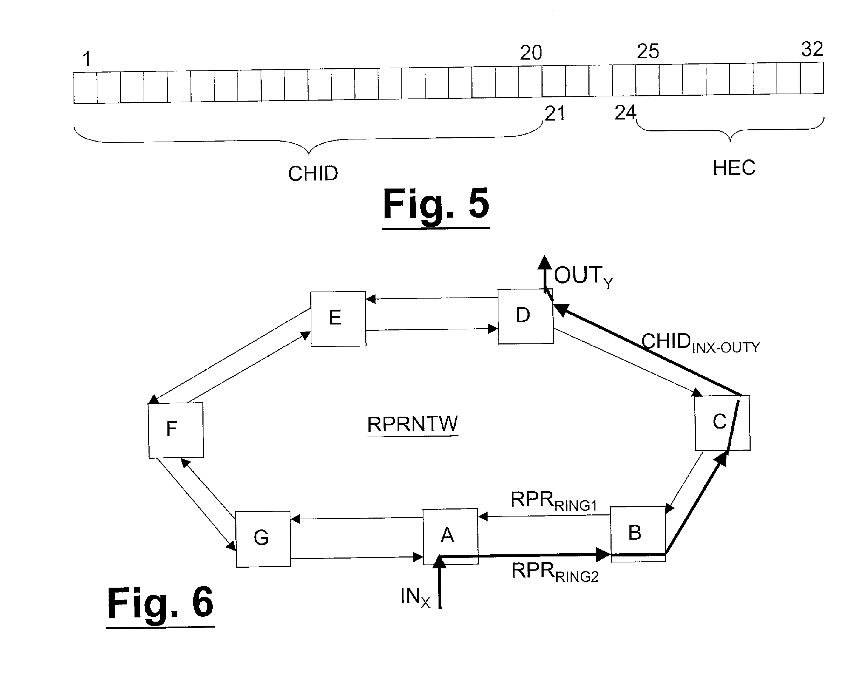

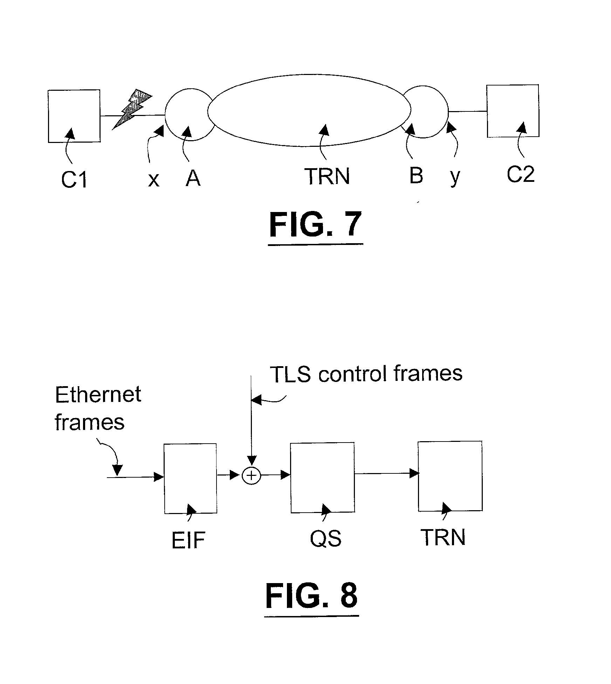

In Fig. 5 a possible implementation of the TLS Header is shown. Bits 1 to 20 are assigned to the channel identifier CHID; bits 25 to 32 are assigned to error correction HEC. Some further bits (bits 21-24, hatched in Fig. 5) are foreseen for further use. One of the possible uses is described below with reference to Figs. 7 and 8. Of course, the number of bits assigned to the various fields (and/or their arrangement) could be changed without modifying the generalities of the present invention.

In more details, with reference to the non-limiting example of Fig. 6, in the RPR network RPRNTW the RPR node A receives an Ethernet frame from a port assigned to that node (only one is shown for clearness), namely the generic port connected to the interface X (IN_{X}). This Ethernet frame has to be forwarded to another customer location connected to the Y interface of the termination node D (OUT_{Y}). The service provider has already assigned a certain channel between A and D, with its respective identifier (CHID_{INX-OUTY}), in order to carry out this transport. The Ethernet frame received is encapsulated in a TLS frame, namely the auxiliary Header TLS is added to the Ethernet frame. The channel identifier CHID in the auxiliary Header TLS is set according to the value assigned to the TLS communication from port X of RPR node A to port Y of RPR node D.

The HEC field is filled with the value calculated on the other bits of the (in the example the previous 24 bits). The algorithm utilized to calculate the HEC shall not be further described since it is not the subject of the present invention.

Now, the TLS frame is encapsulated in the data transport layer packet (RPR frame) which shall be utilized by the network of the service provider to transport the packet from node A to node D. In this specific case, in the RPR header the field "source address ID" shall contain the identifier of node A; the field "destination address ID" shall contain the identifier of node D; and the field "protocol type" shall contain the value assigned to the protocol TLS (to be established).

The RPR nodes B and C, by reading the identifier of the destination node, shall recognize that the RPR frame coming from node A has not to be extracted, but it has to prosecute. The RPR nodes B and C do not reject the frame possibly recognized as errored, but they let it pass transparently unless the error hinders certainly the correct identification of the destination node.

Then, node D receives the RPR frame transmitted by node A. As node D is really the destination node of the frame, it ends the frame and passes its payload to the upper layer (layer TLS) specified in the field "protocol type".

The TLS layer controls the field HEC of the Header TLS. If the HEC is correct (no error in the Header TLS), its payload is sent unmodified to the output interface (OUT_{Y}) associated to that channel identifier (CHID_{INX-OUTY}). If the HEC of the TLS Header is not correct, and shows errors, it shall not be possible to identify for a certainty the right output interface and the frame has to be necessarily rejected. In each case, the correct distribution of frames to the right interfaces is assured (in all the cases, wherein it is possible to identify the right destination interface). In all the cases, wherein a right TLS frame is received but with CHID not assigned, the TLS frame is to be rejected.

As from the above description (Fig. 5), In the TLS header there are some further bits (bits 21-24 in the figure) that are available for other uses.

According to a further aspect of the invention, one of these bits (for example the 24^{th} in the TLS header) can be used as Type bit, in order to indicate if the TLS frame is a user data frame (customer's Ethernet frame) or a TLS control frame.

The Type bit can have the following values:
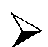 1 - to designate an user data frame (Ethernet frame in the payload);
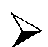 0 - to designate a TLS control frame.

The TLS control frame is completely generated and used in the TLS layer, namely in the TLS block of Fig. 3A and 3B.

The payload of the TLS control frame (Figs. 4 and 5), instead of carrying the Ethernet frame, is composed in the following way: one part, for example the first byte, designates the kind of TLS control frame to be carried; the rest is filled with the relevant control information to be carried, and may have a variable length depending on the amount of information to be carried.

In the following some examples of generation and use of TLS control frames are described.

With reference to Fig. 7, a first example is relating to the definition of a mechanism for failure propagation CSF in a transport network providing a Transparent LAN Service with the TLS layer between two customer boxes C1, C2 (e.g. LAN switches or L3 routers) connected through Ethernet interfaces respectively x and y to edge nodes A and B respectively of the transport network TRN. The edge nodes A and B can be the RPR nodes of Fig. 6.

Any link failure that occurs between the customer box and the ingress transport network edge device has to be propagated up to the egress transport network edge device. With reference to Fig. 7, the failure condition occurring between C1 and A has to be propagated up to B.

The failure propagation allows B to detect a defect. The consequent actions could be: to stop traffic from C2 directed to C1 that, if transmitted, should be discarded in A, wasting resources in the transport network; and/or to inform the customer device C2 about this failure, so that the two customer's boxes perceive the link between them as down.

So in accordance with the invention, a TLS CSF control frame is generated and used for propagating a Client Signal Fail (CSF) condition between C1 and A up to node B with a corresponding control information in the TLS payload.

With reference to Fig. 7, service provider's edge node A detects a failure on the Ethernet interface connected to the customer device C1.

Node A then starts inserting on a periodic time basis TLS CSF control frames, with the same CHID used for the user data frames coming from that interface and to be delivered to the customer box C2 via the egress node B.

Node A stops sending TLS CSF control frames when the failure condition disappears.

A remote edge node (e.g. B in figure 7) detects a CSF defect after having received N consecutive TLS CSF control frames (without any TLS user data frames between them). The CSF defect condition is cleared when a TLS user data frame is received or TLS CSF control frames are not received for a certain amount of time.

The consequent actions that the edge node, detecting a CSF condition (e.g. node B in figure 7), can take, are out of the scope of the invention.

A second example is relating to the definition of a failure detection mechanism in a transport network providing a Transparent LAN Service with the TLS layer between two customer boxes C1, C2 (e.g. LAN switches or L3 routers) connected through Ethernet interfaces respectively x and y to edge nodes A and B respectively of the transport network TRN (see Fig. 7).

The following case can occur:
- There are no problems on the Ethernet link connecting C1 with A.
- There is no failure on the transmit side of node A toward the transport network.
- The scheduler mechanism of the data queues in node A fails.

The result of this condition is that no traffic can flow between C1 and C2 and it is not known why.

In particular, the above TLS CSF condition cannot be declared because the Ethernet link between C1 and A is working correctly. The transmission network raises no alarms because everything is working correctly.

According to the invention a TLS CC Control Frame is generated and used for propagating a Continuity Check (CC) control information between interface x on node A and interface y on node B.

With reference to Fig. 7, the service provider's edge node A, as far as interface x connected to customer box C1 is concerned, periodically inserts TLS CC Control Frames with the same CHID used for the user data frames coming from that interface and to be delivered to the customer box C2 through interface y of egress node B.

So, periodically, node A intermixes User Date Frames with a TLS CC Control Frame. A remote edge node (e.g. B in figure 7) periodically receives TLS CC Control Frames. If the TLS CC Control Frames are not received for a certain period of time, a Loss of Continuity (LOC) defect condition is raised. In other words, the egress edge node B understands that the ingress edge node A is not able to send traffic to it from interface x because there is a fail inside node A itself.

The defect condition is cleared when either a TLS User Data Frame or a TLS CC Control Frame is received. This means that interface x on ingress node A is able to send traffic to interface y on egress node B again.

The consequent actions that the egress edge node B, detecting a failure condition inside node A, can take are out of the scope of the invention.

Also with reference to Fig. 7, a third example is relating to the transport of Performance Monitoring (PM) information collected at the ingress transport network point (e.g. interface x on node A) up to the remote transport network egress point (e.g. interface y on node B), in order to know the performance of the transport network used to deliver the TLS frames.

According to the invention a TLS PM Control Frame is generated and used for propagating the Performance Monitoring (PM) information between interface x on network edge device A and interface y on network edge device B (see figure 7).

With reference to Fig. 7, the service provider's edge node A, as far as interface x connected to customer box C1 is concerned, periodically inserts TLS PM Control Frames with the same CHID used for the user data frames coming from that interface and to be delivered to the customer box C2 through interface y of egress node B.

In particular, a TLS PM Control Frame is inserted by the transport network edge node A after having transmitted a certain number of User Data Frames.

A remote edge node (e.g. B in Fig. 7) periodically (after a certain number of User Data Frames) receives TLS PM Control Frames. Performance Monitoring information collected by ingress node A on interface x contained in the TLS PM Control Frame are stored in B, so that they can be compared with the local Performance Monitoring information collected by egress node B on interface y. In this way it is possible to calculate how many TLS User Data Frames have been lost on the transport network TRN.

The TLS PM Control Frames are numbered using for example a free running counter, so that the remote egress node can understand whether a certain TLS PM Control Frame has been lost.

The consequent actions that have to be taken after having perceived a strong TLS User Data Frame loss in the transport network are out of the scope of the invention.

Also with reference to Fig. 7, a fourth example is relating to the definition of a Loop-Back mechanism that allows a TLS Network Manager of a known type, not shown in the figures, to check whether the traffic can or cannot flow between interface x on network edge device A and interface y on network edge device B. In other words, the TLS Network Manager wants to be able to check whether the traffic can flow between customer boxes C1 and C2.

According to the invention a TLS LB Control Frame is generated and used for propagating the Loop-Back (LB) information between interface x on network edge device A and interface y on network edge device B (see figure 7).

With reference to Fig. 7, the TLS Network Manager as far as interface x on network edge device A connected to customer box C1, is concerned, when desired inserts TLS LB Control Frames with the same CHID used for the user data frames coming from that interface and to be delivered to the customer box C2 through interface y of egress node B.

In the TLS LB Control Frame there is a bit that will indicate whether the frame has already been looped-back or not.

So, when desired by the TLS Network Manager, node A intermixes User Date Frames with a TLS LB Control Frame.

When a remote edge node (e.g. B in Fig. 7) receives a TLS LB Control Frame with the LB bit not complemented, simply complements the LB bit and sends back the TLS LB Control Frame toward interface x on node A.

When node A receives back the TLS LB Control Frames with the LB bit complemented, then passes the TLS LB Control Frame to the TLS Network Manager.
After having inserted a certain number of consecutive TLS LB Control Frames with no reply from the remote edge node, the TLS Network Manager can conclude that interface y on network edge node B cannot be reached by interface x on network edge node A. In other words, the TLS Network Manager understands that customer boxes C1 and C2 cannot exchange Ethernet frames.

The purpose of the TLS LB Control Frame is not to localize where the fault occurs, but only to inform the TLS Network Manager that the communication between the 2 customer boxes is not possible.

The consequent actions that the TLS Network Manger, after detecting such a failure condition, can take are out of the scope of the invention.

In all of the above examples, if the traffic coming from the considered Ethernet interface on node A has to be delivered to more than one customer's locations (i.e. C3, C4, ... customer boxes), the ingress edge node A or the TLS Network Manager has to insert TLS Control Frames and multicast them to all interfaces of transport network egress nodes connected to these final destinations.

With reference to Fig. 8, in one implementing example, the TLS Control Frames are inserted just after the Ethernet interface stage EIF collecting the Ethernet frames from the customer box, and before the queuing and scheduling mechanism QS, so that the TLS Control Frames are processed in node A in the same manner as they were User data traffic from interface x of node A to interface y on node B.

The steps of the method according to the present invention can be now summarized as follows:
In transmission: receiving an Ethernet frame from a customer interface; processing the Ethernet frame received in a normal way; adding an auxiliary header (TLS Header) to form a TLS frame and, then, adding to the TLS frame so formed, a RPR header to form a RPR data frame to be transported in a RPR ringlet. The auxiliary header at TLS layer contains information (CHID_{INX-OUTY}) about the assigned channel to transport the packet from the input interface X of the node A to the output interface Y of the node D. The auxiliary header at TLS level contains bits (HEC) reserved for the control of information about the Header TLS, and an identifier of the TLS frame type (User Data frame). The RPR Header contains a field of "Source Node ID" which identifies the node A, a field of "Destination Node ID" which identifies the node D and a field of "Protocol Type", set with a value corresponding to the TLS protocol. When appropriate, generating a TLS Control Frame, to be added to the flow of TLS frames, where the TLS Header identifies the TLS Control frame type, the payload contains an identifier of the type of control frame, and the control information.
In reception: receiving a RPR frame; reading the RPR header of the frame, removing it from the RPR ringlet and forwarding it to the upper layer (in our case the TLS layer); if the field "Destination Node ID" corresponds to the Node ID of the RPR node which has received the frame; when passed to the TLS layer, reading the Header TLS; controlling the correctness of the TLS Header (checking the HEC); in case of positive checking, distributing the information contents of the received frame to the customer interface identified by a channel identifier shown in the TLS header, or, in case of negative checking, being not possible to identify for a certainty the customer destination interface, rejecting the frame received; in case of a TLS Control Frame (identified by the 24th Type bit), processing of the control information by the TLS block (Fig. 3A, 3B) receiving the frame, as above described.

The present invention relates also to an apparatus to implement the method and a RPR node comprising the involved apparatus. Another object of the present invention are a TLS frame created as above described and illustrated in the Figures and a RPR frame (or packet) comprising the said TLS frame.

The present invention could indifferently be implemented via hardware or software. In the latter case, it is extended to a program for computer comprising coding means for implementing all the phases of the method, when said program is running in the computer. Besides, it includes computer readable means having a recorded program, wherein said computer readable means comprise coding means for implementing all the phases of the method, when said program is running on a computer.

It is evident that the present invention can be subjected to several modifications, amendments and replacement of parts with otherswhich are of equivalent functionality without going out from the scope of the claims.

## Claims

1. Method to supply a transparent LAN-to-LAN functionality between a first multicustomer source location, with customer input interfaces, and a second multicustomer destination location, with customer output interfaces, through a RPR (RPRNTW) data transport network, wherein said RPR network comprises a plurality of RPR nodes (A, B, ..., G) interconnected to form two ringlets (RPR_{RING1}, RPR_{RING2}) wherein the RPR frames travel in opposite/counter-rotating directions,
the method comprising, in correspondence of the multicustomer source location, the steps of:
- receiving an Ethernet frame from a customer input interface;
- processing the Ethernet frame received;
- adding an auxiliary header (TLS Header) to form a TLS frame; and
- adding an RPR Header to the resulting TLS frame, to form a RPR data frame to be transported in the RPR network towards a multicustomer destination location.

2. Method according to the Claim 1, **characterized in that** the step of adding an auxiliary header (TLS Header) comprises the step of adding a header comprising information (CHID_{INX-OUTY}) about the channel assigned to transport the RPR frame from a customer input interface (X) to a customer output interface (Y).

3. Method according to the Claim 1, **characterized in that** the step of adding an auxiliary header (TLS Header) comprises the step of adding a header comprising bits (HEC) reserved for the checking the correctness of the information in the auxiliary header.

4. Method according to the Claim 1, **characterized in that** it comprises the steps, implemented in correspondence of the multicustomer destination location, of:
- receiving a RPR frame;
- reading the RPR header of the frame; (RPR Header);
- extracting the RPR frame from the RPR network and passing it to the upper layer TLS;
- reading the auxiliary header (TLS Header);
- checking (HEC) the correctness of the auxiliary header (TLS Header) and, in case of positive checking, distributing the payload of the RPR frame received to the customer output interface (Y) identified by a channel identifier (CHID_{INX-OUTY}) shown in the TLS header, or, in case of negative checking, rejecting the RPR frame received.

5. Method according to Claim 4, **characterized in that** in correspondence of the multicustomer source location:
- the step of adding an auxiliary header (TLS Header) further comprises the step of adding an identifier of a TSL Control Frame type;
- the steps of receiving an Ethernet frame from a customer input interface, and processing the Ethernet frame received, are replaced by the step of adding, in the payload part of the TSL frame, an identifier of the type of TLS Control Frame and a control information;
and **in that** in correspondence of the multicustomer destination location:
- it further comprises the step of checking if a TSL Control Frame type is identified;
- if so, the step of distributing the payload of the RPR frame received to the customer output interface (Y) identified by a channel identifier (CHID_{INX-OUTY}) shown in the TLS header, is replaced by the step of processing the payload of said TSL Control Frame.

6. Method according to Claim 5, **characterized in that** in case of said identifier of the type of TLS Control Frame is set to identify a TLS CSF Control frame for propagation of a condition of Client Signal Fail (CSF):
- such a type of TLS CSF Control frame is periodically generated in correspondence of the multicustomer source location where the fail condition is detected, said control information carrying an indication of Client Signal Fail (CSF);
- in correspondence of the multicustomer destination location, a condition of Client Signal Fail (CSF) is detected after receiving a number of consecutive TLS CSF Control frames.

7. Method according to Claim 5, **characterized in that** in case of said identifier of the type of TLS Control Frame is set to identify a TLS CC Control frame for propagation of a condition of failure detection by means of a Continuity Check (CC) indication:
- such a type of TLS CC Control frame is periodically generated in correspondence of a multicustomer source location where a Continuity Check (CC) condition must be verified, said control information carrying an indication of Continuity Check (CC);
- in correspondence of the multicustomer destination location, a condition of Loss of Continuity (LOC) is detected after not receiving a number of consecutive TLS CC Control frames, to indicate that the multicustomer source location is not able to work correctly.

8. Method according to Claim 5, **characterized in that** in case of said identifier of the type of TLS Control Frame is set to identify a TLS PM Control frame for propagation of Performance Monitoring information (PM):
- such a type of TLS PM Control frame is periodically generated in correspondence of a multicustomer source location, said control information carrying the Performance Monitoring information (PM);
- in correspondence of the multicustomer destination location, said Performance Monitoring information (PM) is received and processed.

9. Method according to Claim 5, **characterized in that** in case of said identifier of the type of TLS Control Frame is set to identify a TLS LB Control frame for the set-up of a procedure of Loop-back control,
- such a type of TLS LB Control frame is generated in correspondence of a multicustomer source location, said control information carrying Loop-back information (LB);
- in correspondence of the multicustomer destination location, the TLS LB Control frame is looped back to the multicustomer source location: if the latter does not receive a number of consecutive TLS LB Control frames back, the multicustomer destination location can be declared not reachable.

10. Method according to Claim 5, **characterized in that** in case of connection between one customer input interface and more than one customer output interfaces, the said TLS Control Frames have to be multicasted to all the said more than one customer output interfaces.

11. Apparatus to supply a transparent LAN-to-LAN functionality connection between a first multicustomer source location and a second multicustomer destination location through a RPR (RPRNTW) data transport network,
- said RPR network comprising a plurality of RPR (A, B, ..., G) nodes interconnected to form two ringlets (RPR_{RING1}, RPR_{RING2}) where the RPR frames travel in opposite/counter-rotating directions,
- the source and destination locations comprising respectively a RPR source node (A) and a RPR destination node (D),
wherein the apparatus comprises:
- at least a customer interface for receiving an Ethernet frame;
- a processor of Ethernet frames for processing in a conventional manner the Ethernet frame received;
- a processing block (TLS Block) for adding an auxiliary header (TLS Header) to form a TLS frame.

12. Apparatus according to Claim 11, **characterized in that** said processing block (TLS block) inserts in the auxiliary header (TLS Header):
- information (CHID_{INX-OUTY}) about the channel assigned to transport the RPR frame from a customer input interface (X) to a customer output interface (Y);
- bits (HEC) for the checking the correctness of the information in the auxiliary header.

13. Apparatus according to Claim 11, **characterized in that** said processing block (TLS block) inserts in the auxiliary header (TLS Header) an identifier of a TLS Control Frame type, and in the payload of the TLS frame an identifier of the type of TLS Control Frame and a control information.

14. Apparatus according to Claim 11, **characterized in that** said processing block (TLS Block) adds to the TLS frame a RPR Header to form a RPR data frame (RPR Frame) to be transported in the RPR (RPRNTW) network.

15. Apparatus according to Claim 12, **characterized in that** said processing block comprises:
- a reader of header to read the auxiliary header (TLS Header);
- means for processing said bits (HEC) so as to check the correctness of the auxiliary header (TLS Header) so that, in case of positive checking, the payload of the RPR frame received be distributed to the customer interface (Y) identified by a channel identifier (CHID_{INX-OUTY}) in the TLS header, or, in case of negative checking, the RPR frame received be rejected.

16. Apparatus according to Claim 13, **characterized in that** said processing block further comprises means for checking if a TSL Control Frame type is identified, and for processing the payload of said TSL Control Frame.

17. Apparatus according to Claim 11, **characterized in that** it comprises:
- an input port for receiving directly a RPR Frame;
- means for reading the RPR header of frame (RPR Header); and
- means for extracting the RPR frame from the RPR network and for passing it to the upper layer TLS.

18. Frame (TLS frame) to be mapped in a RPR frame for the transport of information from a first multicustomer source location (A) to a second multicustomer destination location (D) in a RPR (RPRNTW) data transport network, said frame (TLS frame) comprising a part of payload and being **characterized in that** it comprises a part of header (TLS Header) comprising information (CHID_{INX-OUTY}) about the channel assigned for the transport of the RPR frame from an input interface (X) of the source node (A) to an output interface (Y) of the destination node (D).

19. Frame (TLS frame) according to the Claim 18, **characterized in that** said part of header (TLS Header) further comprises bits (HEC) reserved to the checking of information about the same header (TLS Header).

20. Frame (TLS frame) according to the Claim 18, **characterized in that** said part of header (TLS Header) further comprises an identifier of a TLS Control Frame type, and **in that** said payload comprises an identifier of the type of TSL Control frame, and a control information.

21. Frame of RPR type for the transport of information from a first multicustomer source location (A) to a second multicustomer destination location (D) in a RPR (RPRNTW) data transport network, the RPR frame comprising a header (RPR Header) and a following part hereto associated, **characterized in that** in the following part a signal frame of upper layer (TLS frame) is mapped according to any of the Claims 18 to 20.

22. Program for computer comprising coding means for implementing all the phases of Claims 1-10 when this program is running in a computer.

23. Computer means having a recorded program, wherein said computer readable means comprising coding means to implement all the phases of Claims 1-10 when said program is running in a computer.
